# EUROPÄISCHE PATENTSCHRIFT

(11) **EP 0 774 600 B1**
(45) Veröffentlichungstag und Bekanntmachung des Hinweises auf die Patenterteilung: **11.09.2002**
(21) Anmeldenummer: 96117673.2
(22) Anmeldetag: 05.11.1996
(51) Int. Cl.: F16H 59/02

(54) **Getriebebedienungsanordnung für ein Fahrzeuggetriebe**
Control assembly for vehicle gearbox
Ensemble de commande pour boîte de vitesses de véhicule

(30) Priorität: 14.11.1995 US 557590
(43) Veröffentlichungstag der Anmeldung: 21.05.1997
(73) Patentinhaber: DEERE & COMPANY, Moline, Illinois 61265-8098 (US)
(72) Erfinder: Bremner, Ronald Dean, Cedar Falls, Iowa 50613 (US); Newendorp, Bruce Craig, Cedar Falls, Iowa 50613 (US); D'Alessandro, Patricia M., Cedar Falls, Iowa 50613 (US)
(74) Vertreter: Magin, Ludwig Bernhard

(56) Entgegenhaltungen:
- US-A- 3 597 991
- US-A- 3 702 648
- US-A- 3 811 020
- US-A- 4 069 900
- US-A- 4 085 833
- US-A- 5 514 048

## Beschreibung

Die Erfindung bezieht sich auf eine Bedienungsanordnung zur Einstellung eines Fahrzeuggetriebes mit verschiedenen Übersetzungsstufen, wobei die Bedienungsanordnung einen Bedienhebel zur wahlweisen Einstellung einer Parkstellung und einen Fahrtrichtungswahlhebel mit einer Vorwärts-, Neutral- und Rückwärtsstellung beinhaltet.

Es ist bekannt, Fahrzeuge mit einer Getriebebedienungsanordnung auszustatten, die einen Geschwindigkeitswahl- oder Schalthebel zur Auswahl von Getriebeübersetzungsverhältnissen und einen Fahrtrichtungswahlhebel mit einer Vorwärts-, Neutral- und Rückwärtsstellung besitzt. Bei einer solchen Anordnung ist es nicht zwingend erforderlich, daß der Fahrzeugführer den Fahrtrichtungswahlhebel in seine Neutralstellung bringt, wenn die Parksperre eingerückt wird. Ein Fahrzeugführer, der das Fahrzeug verläßt und wieder besteigt, oder ein anderer Fahrzeugführer, der das Fahrzeug besteigt, kann den Schalthebel aus der Parkstellung in eine Gangwahlstellung bewegen, ohne daß er sich der Stellung des Fahrtrichtungswahlhebels bewußt ist. Infolgedessen kann das Fahrzeug beginnen, sich in eine durch den Fahrzeugführer nicht erwartete oder nicht beabsichtigte Richtung in Bewegung zu setzen.

Aus der US-A-4,069,900 geht ein Parksperrsystem für den Antriebsstrang eines durch einen Gangschalthebel zwischen einer Neutralstellung und mehreren Gängen umschaltbaren Getriebes hervor. Zum Einrücken der Parksperre ist ein Parksperrhebel vorgesehen, der sich zwischen einer Freigabestellung und einer Parksperrstellung verschwenken läßt. Der Parksperrhebel steht über ein verdrehbares L-förmiges Hebelelement mit dem Steuerkolben eines Hydraulikventils in Verbindung. Das Hydraulikventil steuert eine Kolbeneinrichtung, durch die sich eine Sperrklinke in Zahneingriff mit einem Getriebezahnrad bringen läßt. Der Zahneingriff wird nur dann aufgehoben, wenn sich der Parksperrhebel in seiner Freigabestellung befindet. An dem Parksperrhebel ist ein Bauteil befestigt, an dessen freiem Arm ein Zwischenglied angelenkt ist, welches mit einem verschwenkbaren Riegel derart in Verbindung steht, daß beim Verschwenken des Parksperrhebels in seine Parksperrstellung der Riegel in die Bewegungsbahn des Gangschalthebels eingreift und den Gangschalthebel in seine Neutralstellung drängt. Durch diesen Mechanismus soll sich der Gangschalthebel automatisch in seine Neutralstellung verschieben, wenn der Parksperrhebel in seine Parkstellung bewegt wird. Der bekannte Mechanismus läßt sich nicht in Verbindung mit einem Bedienelement anwenden, das neben einer Parksperrstellung mehrere Betätigungsstellung aufweist, um beispielsweise ein Getriebes zwischen mehreren Übertragungsverhältnissen umzuschalten.

Die mit der Erfindung zu lösende Aufgabe wird darin gesehen, eine Getriebebedienungsanordnung anzugeben, die das Risiko reduziert, daß sich ein Fahrzeug in einer durch den Fahrzeugführer nicht erwarteten oder nicht beabsichtigten Richtung bewegt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Eine Bedienungsanordnung zur Bedienung eines Fahrzeuggetriebes mit mehreren Übersetzungsstufen beinhaltet einen Geschwindigkeitswahl- oder Schalthebel, der aus einer Parkstellung in eine Gangwahlstellung bewegt werden kann, sowie einen Fahrtrichtungswahlhebel mit einer Vorwärts-, Neutral- und Rückwärtsstellung. Es ist eine Anordnung vorgesehen, die bewirkt, daß sich der Fahrtrichtungswahlhebel automatisch in seine Neutralstellung bewegt, sobald der Schalthebel in seine Parkstellung gebracht wird. Ferner sind Mittel vorgesehen, die ein Parksignal erzeugen, sobald der erste Bedienhebel in seine Parkstellung gebracht wird, sowie Mittel, die den Fahrtrichtungswahlhebel aufgrund des Parksignals in seine Neutralstellung bringen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine ausschnittsweise schematische Darstellung einer erfindungsgemäßen Getriebebedienungsanordnung und
- Fig. 2: eine perspektivische Ansicht eines Vorwärts-Neutral-Rückwärts-Hebels, der an einer Fahrzeug-Lenksäule angebracht ist.

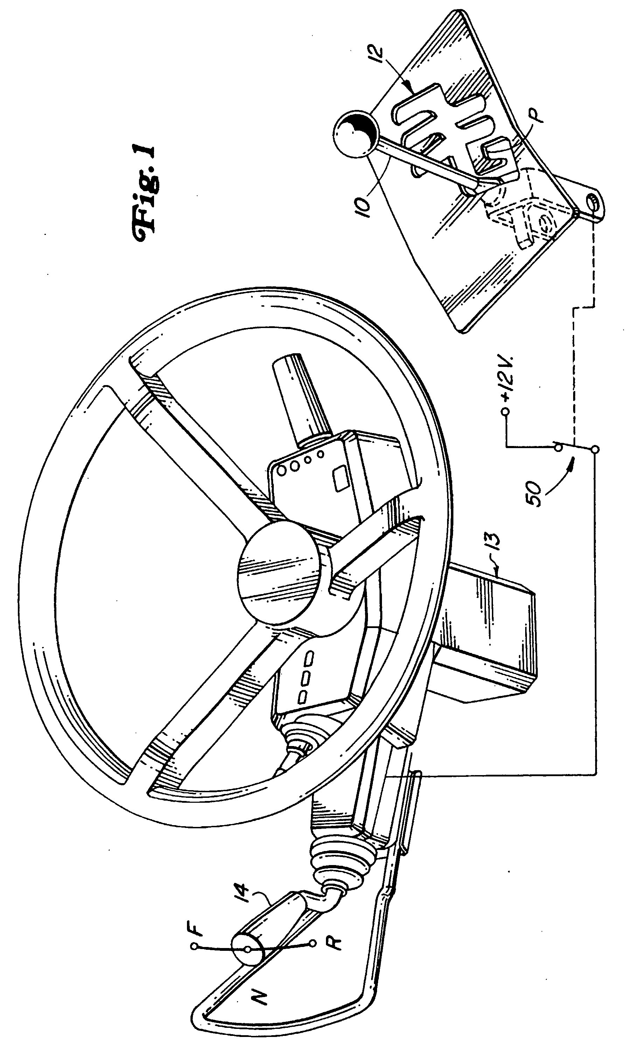

Fig. 1 zeigt einen Bedienhebel, vorzugsweise einen Schalt- oder Bereichshebel 10, der in einer Schaltkulisse 12 in verschiedene Positionen, einschließlich einer Parkstellung P bewegbar ist, um ein nicht gezeigtes herkömmliches Fahrzeuggetriebe, wie z. B. ein John Deere Power Quad 4-Geschwindigkeitsgetriebe zu bedienen. Solch ein Schalthebel 10 ist vorzugsweise an einer nicht dargestellten Konsole eines Fahrzeugführerhauses angebracht. Ein herkömmlicher Fahrtrichtungswahlhebel 14 ist wirksam mit dem nicht gezeigten Getriebe verbunden. Er kann in eine Vorwärtsstellung F, die mit einer Stellung des Getriebes verknüpft ist, um das Fahrzeug in Vorwärtsrichtung zu bewegen, sowie in eine Neutralstellung N, die mit einer Neutralstellung des Getriebes verknüpft ist, und in eine Rückwärtsstellung R bewegt werden, die mit einer Stellung des Getriebes verknüpft ist, um das Fahrzeug in Rückwärtsrichtung zu bewegen. Die Neutralstellung N befindet sich zwischen der Vorwärtsstellung F und der Rückwärtsstellung R. Ein solcher Fahrtrichtungswahlhebel 14 ist vorzugsweise an der Lenksäule 13 in einem Fahrzeugführerhaus angebracht.

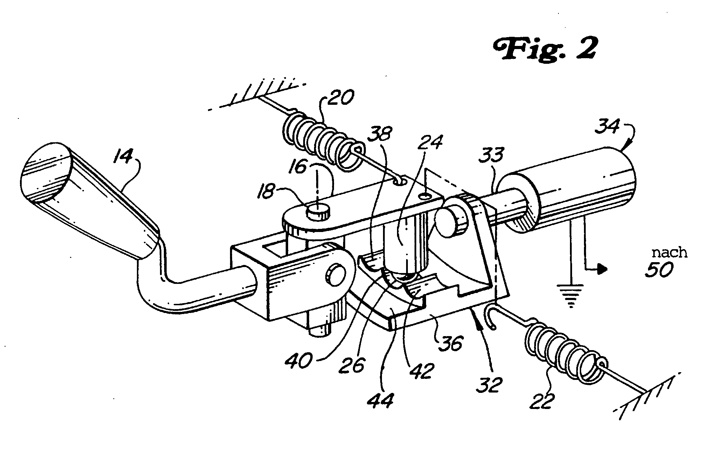

Entsprechend Fig. 2 ist der Fahrtrichtungswahlhebel 14 mit einem Dreharm 16 verbunden, der um einen Stift 18 drehbar gelagert ist. Ein Paar von Zentrierfedern 20, 22 ist so vorgespannt, um den Fahrtrichtungswahlhebel 14 in seine Neutralposition zu drängen. Auf das Ende des Dreharms 16 ist eine Rasthülse 24 aufgesetzt. In das Ende der Rasthülse 24 ist eine Rastrolle 26 eingesetzt, die durch eine innerhalb der Rasthülse 24 angeordnete nicht gezeigte Feder nach außen gedrückt wird. Die Rastrolle 26 kann mit einem Rastschiebermechanismus in Eingriff treten, der einen Rastschieber 32 beinhaltet. Der Rastschieber 32 ist an einem Schaft 33 eines Linearantriebs 34, beispielsweise eines linearen Elektromagnets, befestigt. Der Schieber 32 beinhaltet eine Grundplatte 36 auf der drei bogenförmige Rastvertiefungen 38, 40 und 42 und eine Nut 44 ausgebildet sind. Der Schieber 32 hat eine Raststellung, in der die Rastrolle 26 mit den Vertiefungen 38 - 42 in Eingriff treten kann, und eine nicht rastende Freigabestellung, in der sich die Rastrolle 26 frei in der Nut 44 bewegen kann. Wird der Elektromagnet 34 erregt und ausgefahren, so befindet sich der Schieber 32 in der in Fig. 2 gezeigten Rastposition. Der Schieber 32 ist bezogen auf Fig. 2 vorzugsweise nach rechts, daß heißt in Richtung seiner eingefahrenen Freigabestellung durch eine nicht gezeigte Feder im Innern des Elektromagnets 34 vorgespannt.

Wie aus Fig. 1 hervorgeht, ist ein normalerweise geschlossener Parkschalter 50 elektrisch zwischen eine 12 Volt Spannungsquelle +12V, beispielsweise der Fahrzeugbatterie, und den Elektromagneten 34 geschaltet. Bei geschlossenem Parkschalter 50 ist der Elektromagnet 34 erregt und ausgefahren. Der Schieber 50 befindet sich dann in der in Fig. 2 gezeigten Raststellung. Der Parkschalter 50 ist funktionsmäßig mit dem Schalthebel 10 verbunden, so daß er nur dann geöffnet wird, wenn der Schalthebel 10 in seine Parkstellung P gebracht wird. Daraus folgt, daß sobald der Schalthebel 10 in seine Parkstellung P gebracht wird, der Parkschalter 50 öffnet und der Elektromagnet 34 von der Spannungsquelle getrennt wird, wodurch sich der Schieber 32 nach rechts bewegt und die Vertiefungen 38 - 42 aus dem Eingriffsbereich der Rastrolle 26 bringt. Die Zentrierfedern 20 und 22 bringen den Fahrtrichtungswahlhebel 14 dann in seine Neutralstellung N. Hierdurch wird verhindert, daß der Fahrzeugführer den Fahrtrichtungswahlhebel 14 unbeabsichtigt in Vorwärts- oder Rückwärtsstellung F, R beläßt, nachdem der Schalthebel 10 in die Parkstellung P gebracht worden ist. Ferner wird der Fahrtrichtungswahlhebel 14 im Falle eines Ausfalls der Energieversorgung in seine Neutralstellung N gebracht, da der Elektromagnet 34 erregt werden muß, um den Schieber 32 in seine Raststellung zu bringen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. In dieser Hinsicht kann die vorliegende Erfindung in Verbindung mit einem beliebigen Satz von Getriebebedienelementen benutzt werden, bei dem die Parksperre mit einem anderen Hebel als die Fahrtrichtungswahl betätigt wird. So gibt es beispielsweise einige Traktoren, die einen Parksperrbedienhebel besitzen, der von jeder anderen Bedienung unabhängig ist. Andere Traktoren benutzen eine Feststellbremse anstelle einer Parksperre. Diese Erfindung ist für beide Anwendungsfälle geeignet.

## Patentansprüche

1. Bedienungsanordnung zur Einstellung eines Fahrzeuggetriebes mit verschiedenen Übersetzungsstufen, wobei die Bedienungsanordnung einen Bedienhebel (10) zur wahlweisen Einstellung einer Parkstellung (P) und einen Fahrtrichtungswahlhebel (14) mit einer Vorwärts-, Neutral- und Rückwärtsstellung (F, N, R) beinhaltet, **dadurch gekennzeichnet, daß** mit dem Fahrtrichtungswahlhebel (14) ein Rastmechanismus verbindbar ist, der eine Raststellung, in der der Fahrtrichtungswahlhebel (14) in seiner Vorwärts- oder Rückwärtsstellung (F, R) gehalten wird, und eine Freigabestellung, in der der Fahrtrichtungswahlhebel (14) sich in seine Neutralstellung (N) bewegt, besitzt, und daß durch den Bedienhebel (10) beeinflußbare Mittel vorgesehen sind, die den Rastmechanismus in seine Freigabestellung bringen, wenn der Bedienhebel (10) seine Parkstellung (P) einnimmt.

2. Bedienungsanordnung nach Anspruch 1, **dadurch gekennzeichnet, daß** der Rastmechanismus ein mit einer elektrischen Spannungsquelle verbindbares elektrisches Stellglied (34) enthält, das den Rastmechanismus automatisch in die Freigabestellung bringt, wenn seine Verbindung mit der Spannungsquelle unterbrochen wird.

3. Bedienungsanordnung nach Anspruch 1 oder 2, **gekennzeichnet durch** Mittel zur Erzeugung eines Parksignals, sofern sich der erste Bedienungshebel (10) in seiner Parkstellung (P) befindet, sowie **durch** Mittel, die den Fahrtrichtungswahlhebel (14) aufgrund eines Parksignals automatisch in seine Neutralstellung (N) bringen.

4. Bedienungsanordnung nach einem der Ansprüche 1 bis 3, **gekennzeichnet durch** wenigstens eine Zentrierfeder (20,22) die den Fahrtrichtungswahlhebel (14) in seine Neutralstellung (N) drängt, mit dem Fahrtrichtungswahlhebel (14) in Verbindung stehende Rastmittel, die Raststellungen, in denen der Fahrtrichtungswahlhebel (14) in seiner Vorwärtsoder in seiner Rückwärtsstellung (F, R) gehalten wird, und eine Freigabestellung aufweisen, in der der Fahrtrichtungswahlhebel (14) **durch** die Zentrierfeder (20, 22) in seine Neutralstellung (N) gedrängt wird, eine Rastfeder, die mit den Rastmitteln verbunden ist und diese in die Freigabestellung drängt, ein mit den Rastmitteln verbundenes Stellglied (34), welches erregbar ist, um die Rastmittel in ihre Raststellung gegen die Federkraft der Rastfeder zu bringen, eine Spannungsquelle und einen Parkschalter (50), der zwischen die Spannungsquelle und das Stellglied (34) geschaltet ist, wobei der Parkschalter (50) auch mit dem Bedienhebel (10) derart verbunden ist, daß der Parkschalter (50) das Stellglied (34) von der Spannungsquelle trennt, wenn sich der Bedienhebel (10) in seiner Parkstellung (P) befindet.

5. Bedienungsanordnung nach einem der Ansprüche 1 bis 4, **dadurch gekennzeichnet, daß** der Bedienhebel (10) einen Geschwindigkeitswahlhebel einschließt, der eine Mehrzahl von Gangpositionen besitzt, die wählbaren Übersetzungsverhältnissen des Getriebes zugeordnet sind.

## Claims

1. An operating arrangement for setting a vehicle transmission with different transmission ranges, wherein the operating arrangement includes an operating lever (10) for selectively setting a parking position (P) and a direction of travel selector lever (14) with forwards, neutral and reverse positions (F, N, R), **characterized in that** a detent mechanism can be coupled to the direction of travel selector lever (14) and has a detent position in which the direction of travel selector lever (14) is held in its forwards or reverse position (F, R), and a release position, in which the direction of travel selector lever (14) moves into its neutral position (N), and **in that** means which can be acted on by the operating lever (10) are provided and bring the detent mechanism into its release position when the operating lever (10) assumes its parking position (P).

2. An operating arrangement according to claim 1, **characterized in that** the detent mechanism includes a positioning member (34) which can be connected to an electrical voltage source and which automatically brings the detent mechanism into the release position when its connection to the voltage source is interrupted.

3. An operating arrangement according to claim 1 or 2, **characterized by** means for generating a parking signal, insofar as the first operating lever (10) is in its parking position (P) and by means which bring the direction of travel selector lever (14) automatically into its neutral position (N) in response to a parking signal.

4. An operating arrangement according to any of claims 1 to 3, **characterized by** at least one centring spring (20, 22) which biases the direction of travel selector lever (14) into its neutral position (N), detent means connected to the direction of travel selector lever (14) having detent positions in which the direction of travel selector lever (14) is held in its forwards or in its reverse position (F, R), and a release position in which the direction of travel selector lever (14) is biased into its centred position by the centring springs (20, 22), a detent spring which is connected to the detent means and biases these into the release position, a positioning member (34) connected to the detent means and which can be excited in order to bring the detent means into their detent position against the spring force of the detent spring, a voltage source and a parking switch (50) which is connected between the voltage source and the positioning member (34), wherein the parking switch (50) is also so coupled the operating lever (10) that the parking switch (50) isolates the positioning member (34) from the voltage source when the operating lever (10) is in its parking position (P).

5. An operating arrangement according to any of claims 1 to 4, **characterized in that** the operating lever (10) includes a speed selector lever which has a plurality of gear positions which are associated with selectable transmission ratios of the transmission.

## Revendications

1. Ensemble de commande pour une boîte de vitesses de véhicule à plusieurs rapports de démultiplication, pour lequel l'ensemble de commande comprend un levier de commande (10) pour enclencher à volonté une position de stationnement (P) et un levier de sélection du sens de marche (14) avec une position de marche avant, une position de point mort et une position de marche arrière (F, N, R), **caractérisé en ce qu'**au levier de sélection du sens de marche (14) peut être relié un mécanisme à cliquet, qui possède une position d'encliquetage, dans laquelle le levier de sélection du sens de marche (14) est immobilisé dans sa position de marche avant ou de marche arrière (F, R), et une position de déclenchement, dans laquelle le levier de sélection du sens de marche (14) se déplace dans sa position de point mort (N), et que des moyens influençables par le levier de commande (10) sont prévus, qui amènent le mécanisme à cliquet dans sa position de déclenchement quand le levier de commande (10) prend sa position de stationnement (P).

2. Ensemble de commande selon la revendication 1, **caractérisé en ce que** le mécanisme à cliquet contient un vérin électrique (34) qui peut être relié à une source de tension électrique, et qui amène automatiquement le mécanisme à cliquet dans la position de déclenchement quand sa liaison avec la source de tension est interrompue.

3. Ensemble de commande selon la revendication 1 ou 2, **caractérisé par** des moyens de génération d'un signal de stationnement, dans la mesure où le premier levier de commande (10) se trouve dans sa position de stationnement (P), ainsi que par des moyens qui amènent automatiquement le levier de sélection du sens de marche (14) dans sa position de point mort (N) à la suite d'un signal de stationnement.

4. Ensemble de commande selon l'une des revendications 1 à 3, **caractérisé par** au moins un ressort de centrage (20, 22) qui tend à amener le levier de sens de marche (14) dans sa position de point mort (N), par des moyens d'encliquetage liés au levier de sélection du sens de marche (14), qui présentent des positions crantées dans lesquelles le levier de sélection du sens de marche (14) est maintenu dans sa position de marche avant ou de marche arrière (F ou R), et une position de déclenchement, dans laquelle le levier de sélection du sens de marche (14) tend à être renvoyé dans sa position de point mort (N) par les ressorts de centrage (20, 22), un ressort d'encliquetage relié aux moyens d'encliquetage et qui tend à amener ces derniers dans la position de déclenchement, un vérin (34) relié aux moyens d'encliquetage, qui peut être excité pour amener les moyens d'encliquetage dans leur position d'encliquetage à l'encontre de la force du ressort d'encliquetage, une source de tension et un interrupteur de stationnement (50) câblé entre la source de tension et le vérin (34), l'interrupteur de stationnement (50) étant aussi relié au levier de commande (10) de telle sorte que l'interrupteur de stationnement (50) coupe le contact entre le vérin (34) et la source de tension quand le levier de commande (10) se trouve dans sa position de stationnement (P).

5. Ensemble de commande selon l'une des revendications 1 à 4, **caractérisé en ce que** le levier de commande (10) intègre un levier de sélection de vitesse qui possède plusieurs positions de la boîte de vitesses, affectées à des rapports de démultiplication sélectionnables de la boîte de vitesses.
